# FASCICULE DE BREVET EUROPEEN

(11) **EP 2 654 222 B1**
(45) Date de publication et mention de la délivrance du brevet: **10.06.2015**
(21) Numéro de dépôt: 13164001.3
(22) Date de dépôt: 16.04.2013
(51) Int. Cl.: H04B 17/20, H04B 17/00, H03G 3/00, H04B 7/185

(54) **Procédé de test d'une voie d'amplification d'un répéteur d'un satellite de telecommunications.**
Testverfahren eines Verstärkungskanals eines Telekommunikationsatellitenverstärkers.
Method for testing an amplification channel of a repeater of a telecommunications satellite

(30) Priorité: 17.04.2012 FR 1253525
(43) Date de publication de la demande: 23.10.2013
(73) Titulaire: Eutelsat S.A., 75015 Paris (FR)
(72) Inventeur: Le Pera, Alessandro, 92130 Issy Les Moulineaux (FR); Piro, Frédéric, 75012 Paris (FR)
(74) Mandataire: Lebkiri, Alexandre

(56) Documents cités:
- EP-A1- 2 073 381
- WO-A1-2008/135753
- US-A1- 2010 148 860
- US-B1- 7 088 173

## Description

### DOMAINE

Le domaine de l'invention concerne les méthodes de tests de la chaine d'amplification d'un répéteur d'un satellite de télécommunications, le satellite pouvant être dans une phase de tests précédent la mise en orbite finale ou dans une phase opérationnelle à tout moment de sa durée de vie.

Plus particulièrement, l'invention se rapporte à une méthode de tests d'au moins un tube à ondes progressives d'une chaine d'amplification d'un répéteur d'un satellite. Le domaine de l'invention concerne les tests pouvant être effectués sans interruption de services et tout en minimisant les dégradations notamment causées par les interférences des systèmes voisins ou des interférences pouvant être causés par son propre système.

### ETAT DE L'ART

Lorsqu'un satellite de télécommunications est lancé dans son orbite opérationnelle, un certain nombre de tests doivent être effectués pour s'assurer que toutes les fonctionnalités sont validées avant sa mise en état opérationnelle.

Il arrive également qu'un certain nombre de tests doivent être conduits pendant la phase opérationnelle du satellite. Ces tests doivent préférentiellement être conduits sans interruption de service notamment vis à vis des opérateurs exploitant des canaux de diffusions transitant par le satellite.

Les satellites de télécommunications assurent généralement une fonction de répéteur, c'est-à-dire qu'ils retransmettent dans une zone prédéfinie un signal envoyé au satellite par exemple pour une application de diffusion.

Le satellite comprend un ensemble d'équipements formant par exemple un système de commandes, de traitements, d'amplification, d'adressage et de diffusion de signaux. Lorsqu'un équipement est défectueux ou qu'une panne survient, il est important de connaitre l'origine de la panne et de tester certains équipements.

Un équipement particulièrement sensible est la chaine d'amplification qui peut comprendre une ou plusieurs voies d'amplification correspondant une démultiplication des capacités du satellite.

Une voie d'amplification d'un répéteur d'un satellite comprend généralement un tube d'amplification à ondes progressives. Il s'agit d'un amplificateur à large bande avec un très faible bruit de fond. Généralement, un satellite de télécommunications comporte plusieurs voies correspondant à des canaux d'une certaine largeur de bande de fréquences. Chaque canal peut être loué ou utilisé par des diffuseurs ou opérateurs. Il est donc important que chaque voie soit indépendante et que les canaux soient disjoints.

Une architecture concernant une voie d'amplification comprend généralement en série un premier amplificateur à gain variable, dit ALC, dont le gain est dynamiquement calculé par exemple pour obtenir une puissance de sortie fixe et un amplificateur, dit TWT, qui correspond au tube d'amplification à ondes progressives.

Lorsque qu'une pluralité de voies d'amplification est utilisée dans un répéteur, le système comprend au moins un multiplexeur et un système d'aiguillage des canaux de communications permettant d'agréger les différents canaux dans les différentes voies d'amplification.

Lors des tests des voies d'amplification, il est important d'obtenir des mesures précises et de s'affranchir de tous signaux pouvant causés des erreurs de calculs.

Actuellement, les tests de puissance sont effectués par la définition et le choix d'un signal de test qui sera émis depuis le sol vers le satellite. Le test nécessite une configuration préalable du répéteur notamment en ce qui concerne la voie d'amplification testée. Lorsque le répéteur comprend une pluralité de voies d'amplification, il est nécessaire de paramétrer une séquence de tests de plusieurs voies. Chacune des voies est configurées selon l'objet du test à conduire.

Par exemple dans une première configuration, les amplificateurs TWT peuvent être configurés dans un mode appelé FGM qui permet de maintenir un gain fixe de la chaine d'amplification.

Dans une seconde configuration, il est possible de configurer les amplificateurs pour que la puissance de sortie soit maximale en sortie de la chaine d'amplification, dans cette configuration, une liaison de commande descendante permet de piloter la puissance émise de manière à garantir un niveau de puissance reçue au niveau des amplificateurs.

Dans une troisième configuration, les amplificateurs peuvent être configurés au moyen d'amplificateurs ALC de manière à maintenir une puissance de sortie en sortie de la chaine d'amplification constante. La particularité des amplificateurs ALC est que le réglage du gain variable est effectué automatiquement et dynamiquement à partir d'un niveau de puissance d'entrée reçue et d'une puissance de sortie souhaitée. Cette configuration a l'avantage de maintenir une puissance de sortie fixe en sortie de la chaine d'amplification dynamiquement.

Un problème est lié aux interférences des systèmes voisins utilisant parfois les mêmes bandes de fréquences que le système testé et que le signal de test. Les systèmes voisins peuvent induire des erreurs dans le calcul du gain dynamique par exemple car la puissance des interférences est prise en compte dans la chaine d'amplification.

Il est donc nécessaire de réaliser ces tests par exemple la nuit ou parfois il est nécessaire d'attendre qu'un système voisin s'éloigne ou change de canal de diffusion.

Une solution consiste à reconfigurer le multiplexeur et la matrice d'aiguillage des canaux pour sélectionner une autre bande de fréquences dans l'objectif de diminuer l'influence des interférences sur les tests conduits.

Lorsque les tests sont conduits avant la mise en orbite finale du satellite, la période pendant laquelle les tests des voies d'amplification sont réalisés est courte et le satellite peut être dans une configuration non optimale pour la bonne conduite des tests d'amplification.

Il peut être nécessaire dans ce cas de chercher un point d'orbite sur lequel il n'y a pas d'interférence et où les systèmes voisins ne seront pas perturbés par les émissions et réceptions de test au niveau du satellite.

Il est parfois nécessaire de trouver un point de l'orbite du satellite assez éloigné de l'orbite finale de ce dernier, ce qui impose un certain coût en termes de temps et pour la mise en oeuvre du test.

Le point de l'orbite où les tests peuvent être réalisés n'est en plus peut-être pas compatible de la position de la station terrestre.

Une autre solution consiste comme précisé précédemment de conduire des tests la nuit ou d'attendre des créneaux « libres » dans un environnement de plus en plus encombré sur les orbites des satellites de télécommunications. Cette solution est toutefois contraignante pour le personnel qui effectue les tests sur le répéteur du satellite.

Le document US 2010/0148860 divulgue un système de test d'une voie d'amplication dans lequel un générateur de signaux est consacré exclusivement aux signaux de test.

### RESUME DE L'INVENTION

L'invention permet de résoudre les inconvénients précités, suivant le procédé défini par la revendication indépendant 1.

L'objet de l'invention concerne un procédé de test d'une voie d'amplification d'un répéteur d'un satellite connectée d'une part à au moins une première antenne de réception de signaux utiles et une seconde antenne d'émission pour la diffusion des dits signaux utiles. La voie d'amplification permet d'amplifier des signaux utiles d'une pluralité de canaux de communications en fréquences, lesdits canaux étant compris dans une première bande de fréquences. La voie d'amplification est adaptée à la première bande. En outre, le satellite comprend au moins un générateur de signaux d'un sous-système permettant la génération de données de télémétrie vers une seconde antenne d'émission pour leur réception au sol.

Le procédé de test comprend :
- une définition d'un signal de test comprenant le choix d'une fréquence porteuse comprise dans la première bande de fréquences ;
- une configuration du répéteur permettant de :
   ∘ de transmettre le signal généré par le générateur de signaux vers la voie d'amplification ;
   ∘ d'aiguiller le signal de test amplifié par la voie d'amplification vers la seconde antenne d'émission ;
- une analyse des paramètres des signaux définis et amplifiés par la voie d'amplification et émis par l'antenne d'émission après réception des signaux au sol.

Un avantage du procédé de l'invention est de s'affranchir des interférences des systèmes voisins par la génération d'un signal de test à bord du satellite et non plus envoyé depuis le sol.

Un autre avantage est de disposer d'un générateur en fréquences au sein du satellite permettant une triple fonction dont :
- la première fonction est de permettre la gestion des commandes de télémétrie notamment par leur réception, leur décodage et leur exécution ;
- la seconde fonction est de permettre une surveillance du satellite notamment par des transmissions de données de surveillance ;
- la troisième fonction que permet cette invention est de piloter des tests des chaines du répéteur, notamment des voies d'amplification par la génération de signaux à bord.

Avantageusement, chaque canal est séparé d'un autre canal adjacent par une bande de garde. Dans ce cas, la définition d'un signal de test comprend une sélection d'une des bandes de gardes située entre deux canaux de communications adjacents dans laquelle la fréquence porteuse du signal de test est définie.

Un avantage de cette solution est de s'affranchir des interférences avec les signaux utiles des canaux de communications puisqu'une bande de garde est définie.

Enfin, les tests peuvent être : d'une part conduits avant la mise en orbite opérationnelle du satellite pendant les tests préliminaires effectués sur le répéteur d'un satellite et d'autre part effectués pendant la vie du satellite sans contraindre ce dernier à une interruption de service sur la voie d'amplification testée.

Avantageusement, le répéteur comprend un ensemble de voies d'amplification, la voie d'amplification testée étant sélectionnée au moyen d'une matrice d'aiguillage configurable permettant d'acheminer le signal de test de la bande de garde dans la voie d'amplification testée du répéteur, le procédé comprenant une étape de sélection de la voie d'amplification à tester.

Avantageusement, un switch de sortie permet d'acheminer le signal de test en sortie de la voie d'amplification vers la seconde antenne d'émission.

Avantageusement, chaque voie d'amplification comprend un tube d'amplification à ondes progressives.

Un avantage de cette solution est de permettre de tester les tubes à ondes progressives qui sont des éléments essentiels et particulièrement sensibles des voies d'amplification du répéteur du satellite. Une matrice d'aiguillage des signaux dans les différents tubes à ondes progressives permet de configurer la sortie du générateur de signaux de la télémétrie vers le tube à tester.

Avantageusement, le signal de test comprend une modulation de type CW.

Avantageusement, le signal de test comprend une modulation à étalement de spectre.

Avantageusement, le procédé comprend une étape d'activation et de paramétrage du procédé de test à partir d'une commande de télémétrie envoyée depuis une station au sol.

### BREVES DESCRIPTION DES FIGURES

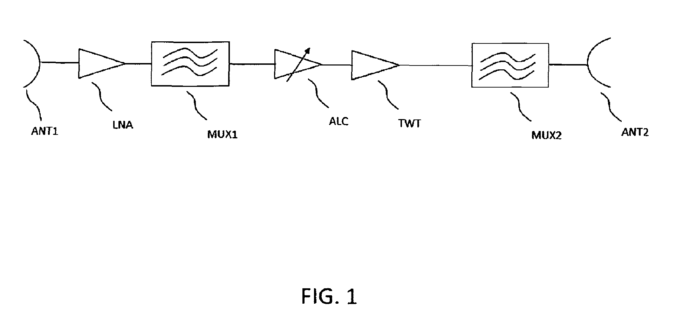

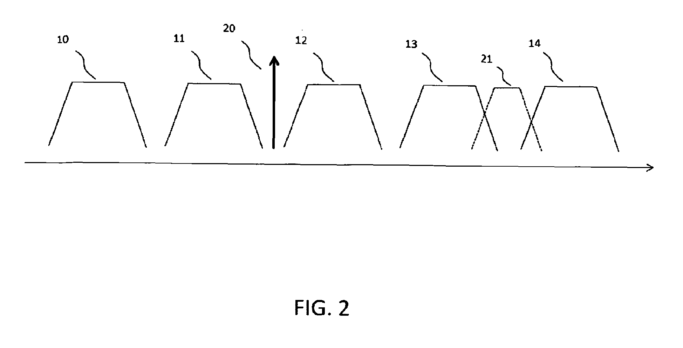

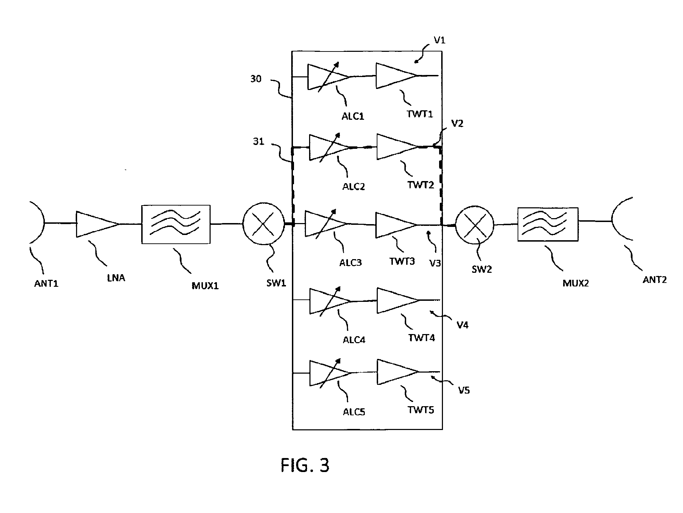

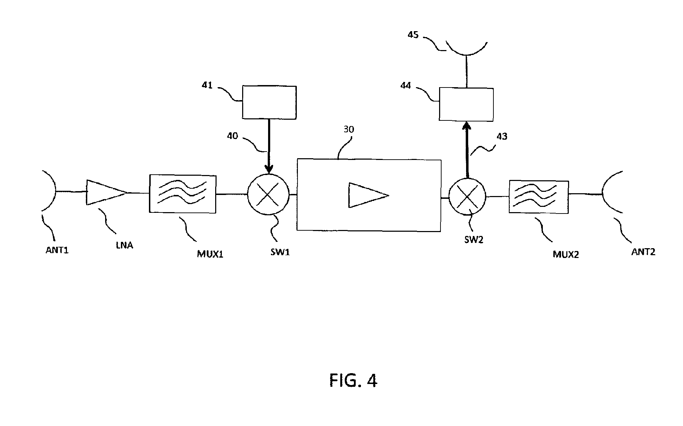

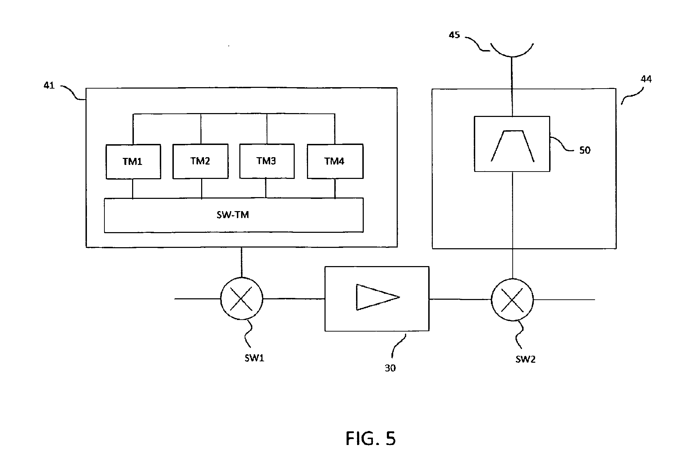

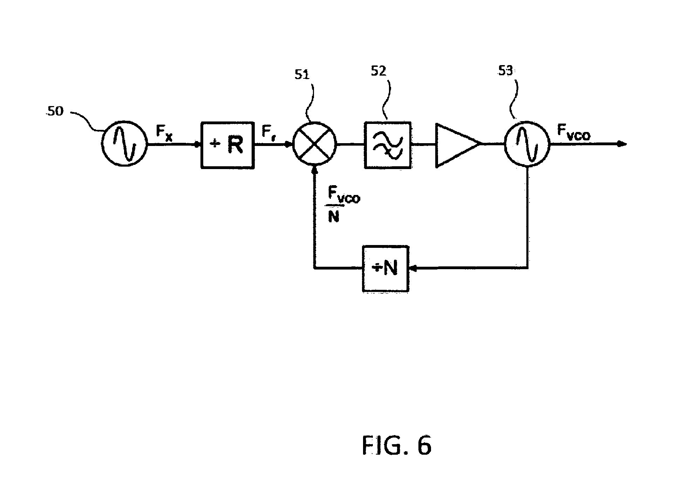

D'autres caractéristiques et avantages de l'invention ressortiront à la lecture de la description détaillée qui suit, en référence aux figures annexées, qui illustrent :
▪ figure 1 : une chaine d'un répéteur d'un satellite comprenant une voie d'amplification ;
▪ figure 2 : des canaux adjacents d'une pluralité de voies d'amplification ;
▪ figure 3 : une chaine d'un répéteur d'un satellite comprenant une pluralité de voies d'amplification;
▪ figure 4 : une chaine d'un répéteur d'un satellite dans laquelle la chaine de traitement des signaux de télémétrie est représentée ;
▪ figure 5 : le détail des éléments de traitements des signaux de télémétrie dans la chaine du répéteur du satellite ;
▪ la figure 6 : un synthétiseur de fréquences de type PLL pouvant être implémenté dans le générateur de signaux.

### DESCRIPTION

Le procédé de l'invention permet de générer un signal de test pour la réalisation de test des voies d'amplification d'un satellite à partir d'un générateur en fréquences à bord du satellite.

Un avantage est de générer un signal de test directement depuis le satellite et non plus depuis une station au sol.

Une particularité du procédé de l'invention est d'utiliser un générateur déjà opérationnel pour les fonctions de télémétrie, il est noté TM. Lorsque le sous-système de télémétrie comporte plusieurs générateurs, les générateurs sont notés TMi ou i permet de numéroter les différents générateurs.

Généralement, le générateur de signaux du sous ensemble de la télémétrie permet de surveiller le satellite à chaque instant de sa vie, un générateur en fréquence peut être employé pour générer des signaux de commandes ou de surveillance vers une station au sol.

Le procédé de l'invention permet de réaliser une campagne de tests de la chaine du répéteur et notamment des voies d'amplification du répéteur par la génération d'un signal de test à partir d'un générateur TM du sous-système de gestion des commandes de télémétrie.

Un avantage est qu'un premier raccordement du générateur TM du sous-ensemble de la télémétrie peut être effectué avec un switch permettant de diriger les signaux générés vers au moins une voie d'amplification normalement parmi les voies d'amplification utilisées pour amplifier les signaux utiles du répéteur.

Un second raccordement permet de récupérer le signal de test amplifié et de l'acheminer vers une antenne utilisée normalement par la télémétrie.

Un avantage est que les antennes, assurant l'émission et la réception des signaux de télémétrie, permettent une bonne couverture du satellite au sol. Il est toujours possible depuis une station au sol d'être en contact avec le satellite par cette voie-là.

Les tests peuvent donc être conduits à n'importe quelle orbite du moment que la voie de télémétrie est opérationnelle.

Le procédé de l'invention permet de générer un signal de test à une fréquence située dans une bande de garde, la bande de garde étant une bande non utilisée par les canaux de communication du répéteur d'un satellite.

Le signal de test n'est donc pas perturbé à l'entrée du récepteur par des interférences des systèmes voisins.

En outre, le signal de test n'est pas perturbé par des interférences pouvant provenir des signaux des canaux de communications du satellite puisque une bande de garde est utilisée.

Une particularité du procédé de l'invention est d'acheminer le signal de test dans une voie d'amplification du répéteur afin de tester ladite voie par l'analyse du signal amplifié.

Une configuration du répéteur permet d'acheminer le signal de test après amplification vers une antenne d'émission du sous-système de gestion des commandes de télémétrie. En effet le sous-système de gestion des commandes de télémétrie comprend un ensemble d'antennes d'émission et de réception pour la réception et l'émission des commandes de télémétrie.

Le procédé de l'invention permet d'utiliser une partie de ce sous-système pour la génération d'un signal de test et pour son émission vers une station au sol. Le signal de test qui a été amplifié est ensuite analysé au sol dans une station terrestre.

Un intérêt est d'utiliser la chaine permettant d'émettre des données de télémétrie et non les antennes permettant de transmettre les signaux utiles des opérateurs. Un avantage de l'invention de permettre de tester une voie d'amplification sans interruption de service d'un opérateur utilisant un canal de communication pour la diffusion de signaux utiles ou encore d'effectuer des tests préliminaires à la mise en orbite opérationnelle.

Le satellite comprend, comme indiqué précédemment, un sous-système pour la gestion de la télécommande du satellite notamment par l'utilisation d'une voie de télémétrie. Le procédé de l'invention permet d'utiliser l'émetteur, noté TM, du sous-ensemble de la télémétrie du satellite pour réaliser un test sur une voie d'amplification sélectionnée.

Deux antennes permettent de recevoir les commandes provenant du sol et d'actionner ou d'agir sur des éléments du satellite. Les deux antennes permettent également de réémettre des données de télémétrie au sol, notamment des données concernant un état de fonctionnement du satellite ou encore un acquittement de données correspondants à des indicateurs concernant la vie du satellite.

Selon un mode de réalisation de l'invention, le signal de test peut être acheminé vers les deux antennes de télémétrie, généralement notées +Z et -Z. Cette configuration permet de réaliser les tests des voies d'amplifications notamment en bénéficiant d'une émission omnidirectionnelle.

Ce mode est particulièrement intéressant dans la phase préliminaire correspondant à la période précédente la mise en orbite finale. Cette dernière phase, encore appelée LEOP désignant dans la terminologie anglo-saxonne « Launch and Early Orbit Phase », est une phase critique. Pendant cette phase assez courte, certains tests doivent être effectués pour s'assurer du bon fonctionnement des équipements tout en s'affranchissant des interférences des systèmes voisins.

Les deux antennes du sous-système de télémétrie permettent de couvrir toutes les directions. En conséquence, tous les signaux émis par ces antennes peuvent donc être reçus par une station terrestre.

Un avantage du procédé de l'invention est de permettre la génération d'un signal à partir d'un générateur TM de signaux initialement destiné à la télémétrie pour l'acheminer vers au moins une voie d'amplification puis de router ce signal vers une antenne d'émission destinée initialement aux signaux de télémétrie. L'analyse du signal reçu dans une station au sol permet de tester la voie d'amplification notamment par l'analyse de certains paramètres du signal reçu. A titre d'exemple, l'amplitude du signal et/ou sa puissance reçue permet de tirer une conclusion sur la chaine d'amplification. A fortiori les tubes à ondes progressives, en tant que sous-systèmes des voies d'amplification, peuvent être testés de cette manière-là.

Le procédé de l'invention permet d'effectuer des tests dans la phase précédente la mise en orbite opérationnelle du satellite, mais peut également permettre d'effectuer des tests lorsque le satellite est en fonctionnement et qu'il assure la diffusion de signaux utiles pour des opérateurs, les signaux utiles étant diffusés dans des canaux de communications dédiés.

L'émetteur TM est capable de générer au moins un signal de test qui peut être modulé à partir d'une fréquence porteuse. Dans le cadre du procédé de l'invention l'émetteur TM est capable de générer une fréquence porteuse dans une bande donnée. Notamment, une bande particulièrement intéressante est une bande de garde située entre des canaux de communications de signaux utiles transitant dans le répéteur. Généralement, il y a plusieurs bandes de garde lorsque plusieurs canaux de signaux utiles sont utilisés.

Une bande de garde peut être située entre deux canaux adjacents et permet de ne pas interrompre le service pendant le test de la voie d'amplification.

L'émetteur TM peut générer un signal de test modulé par une fréquence porteuse choisie par exemple dans la bande Ku. Cette bande est particulièrement intéressante pour les satellites et pour tester les voies d'amplifications pour lesquelles elles sont adaptées. La modulation utilisée peut être définie dans un mode de radio télégraphie de type modulation CW.

La figure 1 représente une chaine principale d'un répéteur permettant de recevoir, traiter, amplifier et diffuser des signaux utiles. La chaine principale comprend une antenne de réception ANT1 pour la réception des signaux utiles. Il est possible qu'une pluralité d'antennes d'émission soient envisagées dans un satellite, le procédé de l'invention ne se limite pas à un nombre d'antennes de réception du répéteur. Une seule antenne a été représentée dans le mode de réalisation de la figure 1.

Une pluralité de canaux de communication sont définis et peuvent être utilisés pour transmettre les signaux utiles. Les canaux de communication sont généralement attribués à différents opérateurs. Tous les signaux de chacun des canaux peuvent être reçus par l'antenne ANT1 ou une pluralité d'antennes.

La chaine principale du répéteur comprend un amplificateur à faible bruit noté LNA. Un premier multiplexeur MUX1 permet de multiplexer différents canaux de communication dans une même voie d'amplification. Cette voie d'amplification est ici représentée par un amplificateur variable noté ALC et un tube à ondes progressives noté TWT.

Généralement, dans un répéteur une pluralité de voies d'amplification est configurée avec en amont un switch d'entrée et un switch de sortie pour attribuer à des données multiplexées ensemble une chaine d'amplification. Dans la figure 1, seule une voie d'amplification est représentée. Un multiplexeur de sortie permet de diriger les canaux de communications des signaux amplifiés vers une antenne d'émission ANT2 adéquate. Il peut y avoir une seule antenne d'émission ANT2 ou une pluralité d'antenne d'émission. Notamment, lorsque l'antenne d'émission ANT2 est associée à un opérateur pour la couverture d'une zone géographique, il est possible qu'en sortie d'une voie d'amplification, des signaux soient acheminés vers une antenne d'émission dédiée.

La figure 2 représente une pluralité de voies de communication notées 10, 11, 12, 13 et 14 qui sont transmises au sein d'une voie d'amplification telle que représentée à la figure 1.

La largeur de la bande de fréquences admissible dans la voie d'amplification permet d'amplifier tous les signaux de chacune des voies de communication représentées.

Le multiplexeur MUX1 permet de séquencer tous les signaux utiles reçus de différents canaux et de les séquencer vers une même voie d'amplification.

Le procédé de l'invention est adaptable à un répéteur de satellite comprenant une pluralité de voies d'amplification.

La figure 3 représente le cas, où le répéteur comprend un ensemble 30 de voies d'amplification. Chacune des voies comprend un amplificateur variable noté respectivement ALC1, ALC2, ALC3, ALC4, ALC5. En outre chacune des voies comporte un tube à ondes progressives notés respectivement sur la figure 3 : TWT1, TWT2, TWT3, TWT4, TWT5.

Dans le cas d'un ensemble 30 de voies d'amplification, le répéteur comprend une matrice d'aiguillage, également appelée communément « switch » et noté SW1 sur la figure 3. Un switch est une matrice qui permet de configurer le flux de données multiplexées dans une voie d'amplification Vi donnée.

En sortie de la voie d'amplification un switch de sortie SW2 permet d'acheminer les signaux amplifiées vers un démultiplexeur MUX2 permettant de diriger les signaux amplifiés vers un émetteur dédié ou mutualisé comprenant une antenne d'émission ANT2. Dans les figures, seules une antenne de réception ANT1 et une antenne d'émission ANT2 sont représentées.

Le procédé de l'invention permet de tester une voie d'amplification sans interruption de servie, notamment en ce qui concerne la transmission des signaux utiles dans les canaux de communication.

Le procédé de l'invention permet de configurer le répéteur de manière à sélectionner une voie d'amplification à tester avec le signal de test. Lorsque que le répéteur comprend une pluralité de voies d'amplification et que tout ou une partie de l'ensemble des voies d'amplification sont testées, un plan de séquencement peut être défini pour définir la séquence de tests des voies d'amplification.

Dans ce cas la séquence de tests comprend :
- une génération d'un signal de test acheminé dans une voie d'amplification ;
- une émission du signal amplifié vers une station au sol ;
- une réception au sol pour l'analyse du signal.

Ensuite ces trois étapes sont réalisées sur une autre voie d'amplification.

La figure 4 représente une chaine d'un répéteur d'un satellite dans lequel l'ensemble de voies d'amplification 30 est représenté par un unique bloc. Le procédé de l'invention permet de définir un signal de test et une modulation à partir d'un générateur TM de signaux d'un sous-système 41, 43 pour la gestion des commandes de télémétrie.

Le générateur TM de signaux n'est pas représenté dans la figure 4. En revanche la figure 5 représente un sous-système 41, 44 dans lequel une pluralité de générateurs de signaux TM1, TM2, TM3, TM4 sont représentés.

Le procédé de l'invention est compatible de tout répéteur comprenant au moins un générateur TM de signaux d'un sous-ensemble pour la gestion des commandes de télémétrie.

Une antenne de réception permettant de recevoir les commandes de télémétrie peut être utilisée lorsque le procédé de l'invention est activé par une commande au sol.

Une antenne d'émission 45 permet de transmettre les commandes de télémétrie à une station au sol.

En ce qui concerne, le procédé de l'invention un signal de test est généré depuis le satellite par un générateur de signaux TMi. Il n'est donc pas émis depuis la station au sol, même si cette configuration est compatible du procédé de l'invention.

L'antenne de réception n'est donc pas nécessaire à la réalisation du procédé de l'invention. En revanche, il peut être envisagé une étape préliminaire dans laquelle une consigne d'activation du procédé est envoyée depuis le sol au sous-système de gestion des commandes de télémétrie pour débuter le procédé de l'invention. Dans ce cas de figure, un générateur de signaux TM_{i,i} [1, 4] permet de générer un signal de test.

Un avantage du procédé de l'invention est de permettre à partir d'un raccordement d'au moins un générateur TMi de signaux au multiplexeur MUX1 ou directement au switch SW1 de manière à acheminer un signal de test dans une voie d'amplification Vi sélectionnée.

La figure 3 représente en pointillé une liaison 31 correspondant à la sélection de la voie d'amplification V2 comprenant un amplificateur ALC2 et un tube d'amplification à ondes progressives TWT2.

Lorsque le sous-système de gestion des commandes de télémétrie 41 comprend une pluralité de générateurs de signaux TMi, alors un switch SW-TM peut être utilisé de manière à acheminer le signal de test d'un générateur de signaux sélectionné vers le switch SW1 ou le multiplexeur MUX1 de la chaine d'amplification.

Le procédé de l'invention permet de configurer un générateur de signaux TMi et le type de modulation du signal de manière à définir un signal de test adéquate. Le procédé de l'invention permet de définir notamment une fréquence porteuse dans une bande Ku. De manière à éviter toute interférence avec les signaux des canaux de communication transitant dans le répéteur, la fréquence porteuse est sélectionnée dans une bande de garde, c'est-à-dire une bande de fréquences située entre deux canaux de communication utilisant des bandes proches ou sensiblement adjacentes, les signaux de chaque canal de communication empruntant la même voie d'amplification.

La bande de garde peut être d'une largeur de bande de 5MHz par exemple avec une fréquence porteuse sensiblement proche de 11 MHz. La modulation peut être de type CW.

Une fois que le signal de test est défini et que le générateur de signaux TMi est configuré, le raccordement du générateur de signaux étant prévu vers un switch d'entrée SW1 des voies d'amplification, alors une configuration de la matrice d'aiguillage ou du switch d'entrée SW1 permet d'adresser les signaux de test générés par le générateur de signaux TMi vers la voie d'amplification Vi à tester.

Le procédé de l'invention permet d'acheminer un signal de test dans une voie d'amplification à tester et de récupérer le signal amplifié en sortie de la chaine du répéteur par l'intermédiaire d'un switch de sortie SW2. Le switch de sorti peut être préalablement configuré de manière à acheminer le signal amplifié par la voie d'amplification Vi vers une antenne 45 d'émission connectée au sous-système de gestion des commandes de télémétrie 41, 44.

Eventuellement, selon une étape facultative du procédé, une mise en forme du signal de test amplifié peut être effectuée par l'intermédiaire d'un filtre 50 dit « large bande » permettant d'acheminer sur une bande large, notamment de 2 GHz, un signal de test ayant une modulation CW vers la voie descendante.

Le procédé de l'invention permet de définir et de sélectionner une fréquence de test évitant toute interférence avec les signaux des canaux multiplexés dans une voie d'amplification.

Dans un mode de réalisation particulier, le générateur de signaux comprend un synthétiseur de fréquences de type PLL, l'acronyme PLL signifiant dans la terminologie anglo-saxonne : « Phase-locked loop » dans le domaine de l'électronique qui signifie « boucle à verrouillage de phase » ou « boucle à phase asservie ».

La figure 6 représente un exemple de ce mode de réalisation d'un type de synthétiseur pouvant être utilisé dans un générateur de signaux.

Un synthétiseur de fréquences, de type PLL, tel que représenté à la figure 6 permet de modifier le rapport entre la branche oscillateur principal (division par R) et le signal provenant d'un oscillateur contrôlé en tension 53 généralement noté VCO (division par N), de telle sorte qu'en changeant les valeurs de R et N, une large sélection de fréquences de sortie est disponible.

Un détecteur de phase 51, un filtre 52 et un amplificateur sont représentés dans la chaine de traitement du signal Fᵣ et F_{VCO}/N de la figure 6.

La fréquence porteuse du signal de test peut être générée à partir d'un générateur de signaux agile en fréquences dans une bande prédéfinie.

Dans une variante de réalisation, le signal généré par le générateur de signaux TMi peut être modulé par étalement de spectre de manière à limiter encore davantage les interférences potentielles entre les signaux de tests et les signaux utiles transitant dans les voies d'amplification Vi du répéteur du satellite.

Un avantage du procédé de l'invention est de pouvoir réaliser des tests nécessaires du système à n'importe quelle orbite du satellite notamment sans interférer avec des signaux utiles transitant dans le répéteur.

En outre, le procédé de l'invention permet de réaliser des tests pendant la vie du satellite de manière à vérifier qu'une voie d'amplification est opérationnelle.

## Revendications

1. Procédé de test d'une voie d'amplification (Vi) d'un répéteur d'un satellite, ladite voie étant connectée d'une part à au moins une antenne de réception (ANT1) de signaux utiles et une première antenne d'émission (ANT2) pour la diffusion des dits signaux utiles, et une deuxième antenne d'émission pour la diffusion de données de télémetrie la voie d'amplification permettant d'amplifier des signaux utiles d'une pluralité de canaux de communications en fréquences, lesdits canaux étant compris dans une première bande de fréquences, la voie d'amplification étant adaptée à la première bande, le satellite comprenant, en outre, au moins un générateur de signaux (TMi) d'un sous-système permettant la génération de données de télémétrie vers une antenne d'émission (45, ANT2) qui peut être soit la première antenne d'émission (ANT2), soit l'antenne d'émission de télémétrie (45) pour leur réception au sol, **caractérisé en ce que** le procédé comprend :
• une définition d'un signal de test (40) comprenant le choix d'une fréquence porteuse comprise dans la première bande de fréquences ;
• une configuration du répéteur permettant de :
∘ de transmettre le signal de test (40) généré par le générateur de signaux vers la voie d'amplification (Vi), le générateur de signaux étant au moins un générateur d'un sous-système pour la gestion des commandes de télémétrie (TMi) ;
∘ d'aiguiller le signal de test (40) amplifié par la voie d'amplification (Vi) vers une des antennes d'émission (ANT2, 45) ;
• une analyse des paramètres des signaux définis et amplifiés par la voie d'amplification (Vi) et émis par l'antenne d'émission (ANT2, 45) après réception des signaux au sol.

2. Procédé de test d'une voie d'amplification (Vi) selon la revendication 1, **caractérisé en ce que** chaque canal (10, 11, 12, 13, 14) est séparé d'un autre canal adjacent par une bande de garde, la définition d'un signal de test comprenant une sélection d'une des bandes de gardes située entre deux canaux de communications adjacents (13, 14) dans laquelle la fréquence porteuse du signal de test est définie.

3. Procédé de test d'une voie d'amplification (Vi) selon l'une quelconque des revendications 1 à 2, **caractérisé en ce que** le répéteur comprend un ensemble (30) de voies d'amplification (V1, V2, V3, V4, V5), la voie d'amplification testée (Vi) étant sélectionnée au moyen d'une matrice d'aiguillage configurable (SW1) permettant d'acheminer le signal de test de la bande de garde dans la voie d'amplification (Vi) testée du répéteur, le procédé comprenant une étape de sélection de la voie d'amplification à tester (Vi).

4. Procédé de test d'une voie d'amplification (Vi) selon la revendication 3, **caractérisé en ce qu'**un switch de sortie (SW2) permet d'acheminer le signal de test en sortie de la voie d'amplification vers la seconde antenne d'émission (45).

5. Procédé de test d'une voie d'amplification (Vi) selon l'une quelconque des revendications 1 à 4, **caractérisé en ce que** chaque voie d'amplification (Vi) comprend un tube d'amplification à ondes progressives (TWTi).

6. Procédé de test d'une voie d'amplification (Vi) selon l'une quelconque des revendications 1 à 5, **caractérisé en ce que** le signal de test comprend une modulation de type CW.

7. Procédé de test d'une voie d'amplification (Vi) selon l'une quelconque des revendications 1 à 6, **caractérisé en ce que** le procédé comprend une étape d'activation et de paramétrage du procédé de test à partir d'une commande de télémétrie envoyée depuis une station au sol.

## Patentansprüche

1. Testverfahren eines Verstärkungskanals (Vi) eines Repetitors eines Satelliten, wobei der genannte Kanal einerseits an wenigstens eine Empfangsantenne (ANT1) für Nutzsignale und eine erste Sendeantenne (ANT2) für das Ausstrahlen der genannten Nutzsignale und eine zweite Sendeantenne für das Ausstrahlen von Telemetriedaten angeschlossen ist, wobei der Verstärkungskanal die Verstärkung der Nutzsignale einer Vielzahl von Kommunikationskanälen in Frequenzen zulässt, wobei die genannten Kanäle in einem ersten Frequenzband inbegriffen sind, wobei der Verstärkungskanal an das erste Band angepasst ist, wobei der Satellit darüber hinaus wenigstens einen Signalgenerator (TMi) eines Teilsystems umfasst, das die Erzeugung von Telemetriedaten zu einer Sendeantenne (45, ANT2) zulässt, die entweder die erste Emissionsantenne (ANT2) oder die Sendeantenne der Telemetrie (45) für ihren Empfang am Boden sein kann, **dadurch gekennzeichnet, dass** das Verfahren umfasst:
* eine Definition eines Testsignals (40), umfassend die Wahl einer Trägerfrequenz, die in dem ersten Frequenzband inbegriffen ist;
* eine Konfiguration des Repetitors, die:
∘ die Übertragung des vom Signalgenerator generierten Testsignals (40) zum Verstärkungskanal (Vi) erlaubt, wobei der Signalgenerator wenigstens ein Generator eines Teilsystems für die Verwaltung der Telemetriebefehle (TMi) ist;
∘ das durch den Verstärkungskanal (Vi) verstärkte Testsignal (40) zu einer der Sendeantennen (ANT2, 45) zu leiten erlaubt;
* eine Analyse der Parameter der Signale, die durch den Verstärkungskanal (Vi) definiert und verstärkt und von der Sendeantenne (ANT2, 45) nach Eingang der Signale am Boden ausgegeben werden.

2. Testverfahren eines Verstärkungskanals (Vi) gemäß Anspruch 1, **dadurch gekennzeichnet, dass** jeder Kanal (10, 11, 12, 13, 14) von einem anderen, daneben liegenden Kanal durch ein Sicherheitsband getrennt ist, wobei die Definition eines Testsignals eine Auswahl von einem der Sicherheitsbänder umfasst, das sich zwischen zwei daneben liegenden Kommunikationskanälen (13, 14) befindet, in dem die Trägerfrequenz des Testsignals definiert ist.

3. Testverfahren eines Verstärkungskanals (Vi) gemäß Anspruch 1 bis 2, **dadurch gekennzeichnet, dass** der Repetitor eine Gruppe (30) von Verstärkungskanälen (V1, V2, V3, V4, V5) umfasst, wobei der getestete Verstärkungskanal (Vi) mittels einer konfigurierbaren Leitungsmatrix (SW1) ausgewählt ist, die das Leiten des Testsignals des Sicherheitsbandes in dem getesteten Verstärkungskanal (Vi) des Repetitors erlaubt, wobei das Verfahren eine Auswahlstufe des zu testenden Verstärkungskanals (Vi) umfasst.

4. Testverfahren eines Verstärkungskanals (Vi) gemäß Anspruch 3, **dadurch gekennzeichnet, dass** ein Ausgangsschalter (SW2) das Leiten des Testsignals am Ausgang des Verstärkungskanals zur zweiten Sendeantenne (45) ermöglicht.

5. Testverfahren eines Verstärkungskanals (Vi) gemäß Anspruch 1 bis 4, **dadurch gekennzeichnet, dass** der Verstärkungskanal eine Verstärkungsröhre mit progressiven Wellen (TWTi) umfasst.

6. Testverfahren eines Verstärkungskanals (Vi) gemäß Anspruch 1 bis 5, **dadurch gekennzeichnet, dass** das Testsignal eine Modulation vom Typ CW umfasst.

7. Testverfahren eines Verstärkungskanals (Vi) gemäß Anspruch 1 bis 6, **dadurch gekennzeichnet, dass** das Verfahren eine Aktivierungs- und Parametrierungsstufe des Testverfahrens ausgehend von einem von einer Station am Boden versandten Telemetriebefehl umfasst.

## Claims

1. A test method for an amplification way (Vi) of a satellite repeater, said way being connected on the one hand to at least one receiving antenna (ANT1) of wanted signals and a first transmitting antenna (ANG2) for broadcasting said wanted signals, and a second transmitting antenna for broadcasting telemetry data, the amplification way allowing wanted signals from a plurality of communication channels to be amplified in frequencies, said channels being comprised in a first frequency band, the amplification way being adapted to the first band, the satellite further comprising at least one signal generator (TMi) of a sub-system enabling telemetry data to be generated towards a transmitting antenna (45, ANT2) which can be either the first transmitting antenna (ANT2), or the telemetry transmitting antenna (45) so as to be received on the ground, **characterised in that** the method comprises:
• defining a test signal (40) comprising selecting a carrier frequency comprised in the first frequency band;
• configuring the repeater allowing:
∘ to transmit the test signal (40) generated by the signal generator towards the amplification way (Vi), the signal generator being at least one generator of a sub-system for managing telemetry commands (TMi);
∘ to direct the test signal (40) amplified by the amplification way (Vi) towards one of the transmitting antennas (ANT2, 45);
• analysing the parameters of the signals defined and amplified by the amplification way (Vi) and transmitted by the transmitting antenna (ANT2, 45) after the signals are received on the ground.

2. The test method of an amplification way (Vi) according to claim 1, **characterised in that** each channel (10, 11, 12, 13, 14) is separated from another adjacent channel by a guard band, defining a test signal comprising selecting one of the guard bands located between two adjacent communication channels (13, 14) wherein the carrier frequency of the test signal is defined.

3. The test method of an amplification way (Vi) according to any of claims 1 to 2, **characterised in that** the repeater comprises a set (30) of amplification ways (V1, V2, V3, V4, V5), the tested amplification way (Vi) being selected by means of a configurable directing matrix (SW1) enabling the test signal to be conveyed from the guard band into the tested amplification way (Vi) of the repeater, the method comprising a step of selecting the amplification way to be tested (Vi).

4. The test method of an amplification way (Vi) according to claim 3, **characterised in that** an output switch (SW2) enables the test signal at the output of the amplification way to be conveyed towards the second transmitting antenna (45).

5. The test method of an amplification way (Vi) according to any of claims 1 to 4, **characterised in that** each amplification way (Vi) comprises a travelling-wave amplifier tube (TWTi).

6. The test method of an amplification way (Vi) according to any of claims 1 to 5, **characterised in that** the test signal comprises a CW-type modulation.

7. The test method of an amplification way (Vi) according to any of claims 1 to 6, **characterised in that** the method comprises a step of activating and parametering the test method from a telemetry command sent from a ground station.
